# EUROPÄISCHE PATENTSCHRIFT

(11) **EP 0 383 355 B1**
(45) Veröffentlichungstag und Bekanntmachung des Hinweises auf die Patenterteilung: **03.08.1994**
(21) Anmeldenummer: 90103105.4
(22) Anmeldetag: 17.02.1990
(51) Int. Cl.: B60R 1/06

(54) **Fahrzeug-Aussenspiegel mit Rastvorrichtung**
Vehicle external rearview mirror with a notch device
Rétroviseur extérieur de véhicule avec dispositif à encoche

(30) Priorität: 17.02.1989 DE 8901856 U
(43) Veröffentlichungstag der Anmeldung: 22.08.1990
(73) Patentinhaber: HOHE KG, D-97903 Collenberg (DE)
(72) Erfinder: Polzer, Herwig, D-8760 Miltenberg (DE); Fuchs, Hans-Joachim, D-6981 Dorfprozelten (DE); Schwartz, Christoph, Dipl.-Ing., D-6982 Freudenberg (DE)
(74) Vertreter: Zinngrebe, Horst, Dr.rer.nat.

(56) Entgegenhaltungen:
- EP-A- 0 220 606
- DE-A- 2 000 842
- US-A- 3 784 149

## Beschreibung

Die Erfindung betrifft einen Fahrzeug-Außenspiegel mit einem am Fahrzeug befestigbaren Fuß, auf welchem ein ein Spiegelglas tragendes Gehäuse um die Achse eines Rohrstücks schwenkbar befestigt ist, sowie mit einer Rastvorrichtung, welche an einem Fußteil ein erstes Rastelement und an einem dem Fußteil unmittelbar benachbarten Gehäuseteil ein zweites Rastelement aufweist, wobei der gegen Federkraft lösbare Eingriff der Rastelemente eine Gebrauchslage des Gehäuses relativ zum Fuß definiert.

Aus der Gebrauchsmusterschrift G-U-85 20 122.7 ist ein Fahrzeug-Außenspiegel gemäß dem Oberbegriff des Anspruchs 1 bekannt, dessen relativ zum Fuß abklappbares Gehäuse durch die Rastvorrichtung in der Gebrauchslage gehalten ist. Das Gehäuse besitzt in seinem oberen Eckbereich einen zum Fuß weisenden Ansatz, in dessen U-Profil ein entsprechend profilierter Arm des Fußes eintaucht. Das erste Rastelement ist ein im Arm radial gelagerter und durch Federdruck gegen das Ansatz-Profil gedrückter Stift, der bei Eingriff in ein an dem Armprofil ausgebildetes Sackloch das Gehäuse in der Gebrauchslage hält.

Andererseits gibt es Fahrzeug-Außenspiegel etwa gemäß US-A-4 679 758, bei denen sich die äußere fußnahe vordere Form des Gehäuses absatzlos aus einer schnittigen Form des Fußes fortsetzt, wobei der fußnahe Teil des Gehäuses beim Abklappen in eine Ausnehmung des Fußes eindringt. Die das Gehäuse zum Fuß hin abschließende Gehäusewand besitzt dabei einen Abstand von der gegenüberliegenden Fußwand von nur wenigen Millimetern.

Wenn man die aus der erwähnten Gebrauchsmusterschrift bekannte Rastvorrichtung bei der letztgenannten Art von Gehäuse- und Fußformen einsetzt, gleitet der Raststift beim Abklappen des Gehäuses, wenn also der Raststift außer Eingriff mit dem Sackloch gelangt, auf der Außenfläche der fußnahen Gehäusewand. Dadurch ergibt sich ein Reibungswiderstand, der beim Abklappen des Gehäuses beispielsweise nach hinten, d.h. gegen die Fahrtrichtung des Fahrzeuges, überwunden werden muß und der um so größer ist, je stärker die Feder den Raststift gegen die Gehäusewand drückt. Damit ein sicherer Halt des Gehäuses in der Gebrauchslage gewährleistet bleibt, muß der Raststift jedoch hinreichend kräftig gegen die Gehäusewand gedrückt werden. Der Reibungswiderstand des Raststiftes mit der Gehäusewand erweist sich vor allem dann als nachteilig, wenn das Gehäuse mit einem möglichst kleinen Drehmoment willentlich beispielsweise nach hinten an die Fahrzeug-Karosserie herangeschwenkt werden soll.

Der Erfindung liegt daher die Aufgabe zugrunde, einen Außenspiegel der eingangs genannten Art mit einer Rastvorrichtung zu schaffen, bei der der Reibungswiderstand eines der Rastelemente an der Gegenfläche, in der das zweite Rastelement ausgebildet ist, während der Abklappbewegung des Gehäuses möglichst gering ist, ohne daß der sichere Halt des Gehäuses in Gebrauchslage beeinträchtigt wird.

Zur Lösung der Aufgabe ist erfindungsgemäß vorgesehen, daß eines der beiden Rastelemente von einem radial verschiebbaren Übertragungselement beaufschlagt ist, welches gegen eine rohrstücknahe Kulisse anliegt, wobei die runde Peripherie der Kulisse an einem dem Rastelement entsprechenden Umfangsabschnitt einen anderen Abstand von der Achse hat als an einem dem Umfangsabschnitt in Umfangsrichtung benachbarten Abschnitt.

Diese Lösung basiert auf dem Gedanken, das eine Rastelement soweit von seiner Gegenfläche zu beabstanden, daß beim Abklappen keine Berührung mit dieser mehr auftreten kann. Zur Sicherung des Eingriffs in das andere Rastelement dient die Kulisse, welche das eine Rastelement dazu entsprechend radial verschiebt. Da die Kulisse nahe der Achse ausgebildet ist, ist das hierfür aufzubringende Drehmoment gering.

In einer vorteilhaften Ausgestaltung der Erfindung ist das radial äußere Ende des Übertragungselementes als Rastelement ausgebildet. Da es nach der Erfindung nur auf eine Relativdrehung zwischen Übertragungselement mit Rastelement einerseits und Kulisse andererseits ankommt, kann die Kulisse beispielsweise Teil des Fußes und das Übertragungsorgan im Gehäuse gelagert sein.

Nach einer besonders einfachen Ausführungsform der Erfindung ist in dem Fußteil ein Übertragungsstift radial verschiebbar gelagert, welcher am freien Ende gegen den unteren Teil eines fußseitigen radial elastischen Rastelementes, das beispielsweise eine Blattfeder mit auf das Gehäuseteil zuweisender Kerbe sein kann, anliegt, wobei der Umfangsabschnitt einen kleineren Achsabstand aufweist als die benachbarten Peripherieabschnitte der Kulisse.

In bevorzugter Weiterbildung der Erfindung ist die Kerbe dachförmig und der Umfangsabschnitte keilförmig gestaltet, wobei der Steigungswinkel des Keiles geringer ist als derjenige der Kerbe. Durch diese Maßnahme wird das Drehmoment verringert, welches zur Rückkehr des abgeklappten Gehäuses in die Gebrauchslage noch überwunden werden muß.

Weitere bevorzugte Ausgestaltungen der Erfindung sind in den Unteransprüchen angegeben.

Die Erfindung wird nachstehend anhand des in der beigefügten Zeichnung dargestellten Ausführungsbeispiels im einzelnen beschrieben. Es zeigen:
Fig. 1: eine Ansicht von unten auf den Gelenkbereich eines Außenspiegels, wobei der Fuß teilweise aufgebrochen ist und das abgeklappte Gehäuse strichpunktiert angedeutet ist;
Fig. 2: einen Schnitt durch den Außenspiegel nach Fig. 1 längs der Linie A-A aus Fig. 1;

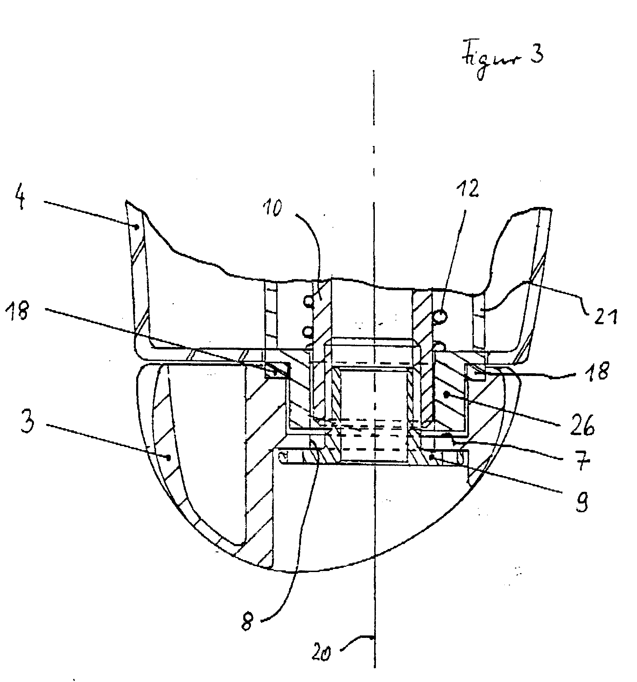

Fig. 3: einen Schnitt längs der Klappachse durch den Außenspiegel nach Fig. 1 längs der linie B-B aus Fig. 2, wobei der obere Teil des Gehäuses weggebrochen ist;

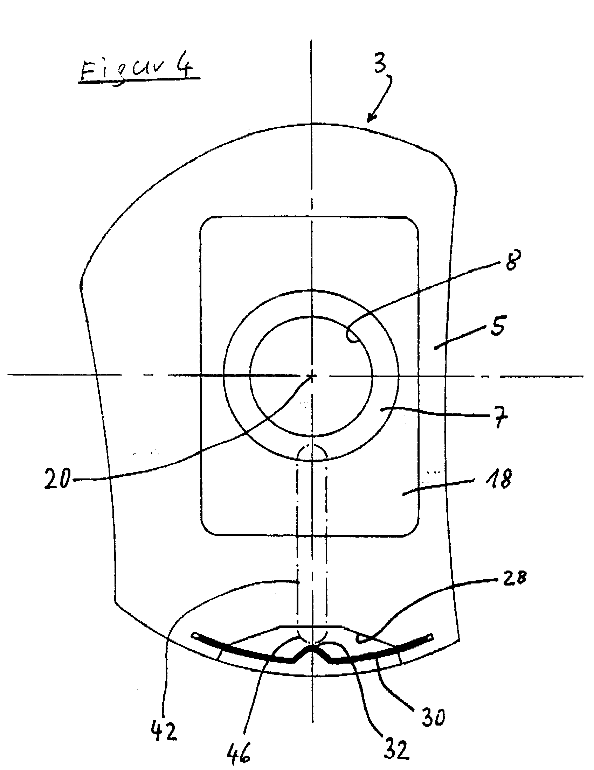

Fig. 4: eine Draufsicht auf den Lagerarm des Spiegelfußes.

Der Außenspiegel, von dem die wesentlichen Teile in den Figuren dargestellt sind, besitzt ein plattenförmiges, etwa dreieckiges Fußteil 2, mit welchem der Außenspiegel an der linken Fahrertür eines Personenkraftwagens befestigt werden kann. An einem am Fuß unten seitlich abstehenden Arm 3 ist das Gehäuse 4 des Außenspiegels schwenkbar befestigt, welches in bekannter und nicht dargestellter Weise ein Spiegelglas vorne und seitlich umschließt und trägt.

Das Spiegelgehäuse 4 ist am Arm 3 wie folgt befestigt: der Arm weist eine im wesentlichen ebene Lagerplatte 5 auf, in deren mittlerem Bereich eine zylindrische Einsenkung 6 ausgebildet ist. Der Boden 7 der Einsenkung 6 besitzt eine mittlere Durchgangsöffnung 8, durch welche sich ein zweiteiliges Rohrstück erstreckt. Das Rohrstück besteht aus einem längeren oberen Rohrteil 10, in welches vom unteren Ende her ein Innengewinde eingeschnitten ist. In das Innengewinde ist ein axial durchbohrter Schraubstopfen 9 eingeschraubt, dessen über die Durchgangsöffnung 8 hinaus radial verbreiteter Kopf 11 am Boden 7 befestigt ist. Eine kräftige, das Rohrteil 10 umgebende Druckfeder 12 ist zwischen der Oberfläche einer Gehäuseplatte 14 und einem das Rohrteil 10 umfassenden Ring 13 eingespannt, welcher sich über ein Ritzel 15 an einer radial vorspringenden Rohrteilschulter 16 axial abstützt. Das Gehäuse 4 ist in nicht dargestellter Weise an einer massiven Tragplatte verschraubt, welche einerseits das Spiegelglas trägt und andererseits mit der Gehäuseplatte 14 fest verbunden ist. Hervorzuheben ist eine Kunststoffscheibe 18 aus Tetrafluorethylen oder dergleichen Kunststoff, der einerseits abriebfest und andererseits weicher ist, als die üblicherweise aus Metall bestehende Gehäuseplatte 14 und die Lagerplatte 5. Die Kunststoffscheibe 18 ist in eine Einsenkung in der Lagerplatte 5 eingesetzt und steht axial geringfügig über die Oberfläche der Lagerplatte 5 vor. Die Kunststoffscheibe 18 hat eine zentrale Bohrung, so daß sie nach innen nicht über den Rand der Einsenkung 6 vorsteht.

Zur Befestigung des Gehäuses 4 auf dem Fußteil 2 wird das Rohrteil 10 nach Aufnahme des Ritzels 13, des Ringes 10 und der Druckfeder 12 auf das Gewindeende des Schraubstopfens 9 aufgeschraubt, und am Schraubstopfen 9 durch Splint o.dgl. veankert. Die Druckfeder 12 preßt dann die Gehäuseplatte 14 auf die Kunststoffscheibe 18 derart, daß das Gehäuse 4 relativ zum Fuß 2 um die Achse 20 des aus Rohrteil 10 und Schraubstopfen 9 bestehenden Rohrstücks drehbar bleibt. Die Achse 20 bildet damit die Klappachse für das Gehäuse 4.

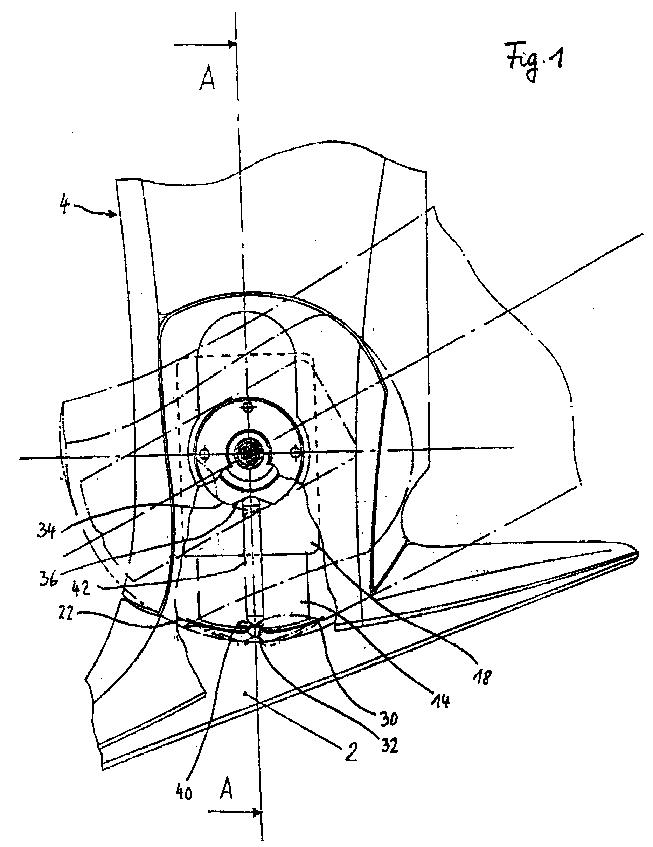

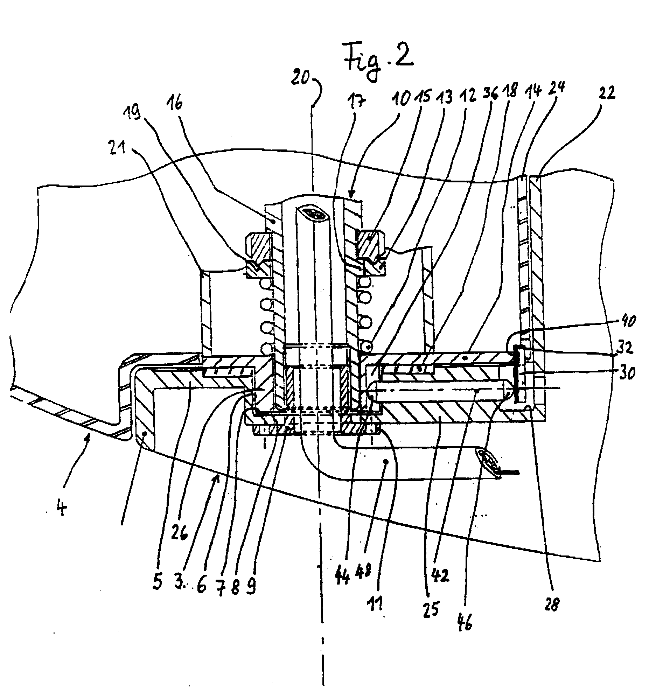

Das Fußteil 2 besitzt eine kreisbogenförmig konkav geformte Fußwand 22, deren Krümmungsmittelpunkt in der Klappachse 20 liegt. Wie insbesondere Fig. 1 erkennen läßt, besitzt das Gehäuse 4 eine fußseitige Gehäusewand 24, die kreisbogenförmig konvex geformt ist und deren Krümmungsmittelpunkt ebenfalls in der Klappachse 20 liegt. Fußwand 22 und Gehäusewand 24 sind einander eng benachbart. Am unteren Ende der Fußwand 22 ist die Lagerplatte 5 rechtwinklig angeformt. Von der der Fußwand 22 benachbarten Begrenzung der Einsenkung 6 ausgehend ist die Lagerplatte in radialer Richtung derart zu einer Rippe 25 verdickt, daß sich, wie Fig. 2 zeigt, die Unterfläche des Bodens 7 bis zur Fußwand 22 erstreckt. Die Rippe 25 besitzt einen von der Fußwand 22 begrenzten Umfangs-Ausschnitt 28, in welchen der untere Teil 38 einer sich im Umfangsrichtung erstreckenden und an der Fußwand 22 befestigten Blattfeder 30 eintaucht.

Die Blattfeder 30 ist an beiden in Umfangsrichtung gegenüberliegenden Enden an der Fußwand 22 befestigt und so gebogen, daß der Krümmungsmittelpunkt ihrer Biegung auf der gegenüberliegenden Seite der Klappachse liegt. In der Mitte ist die Blattfeder 30 mit einer buckeligen, sich quer zu ihrer Länge erstreckenden und auf die Gehäuseplatte 14 zuweisenden Kerbe 32 versehen, die beiderseits mit je einer dachartigen Flanke in den Hauptteil der Blattfeder 30 übergeht.

Die Gehäuseplatte 14 reicht bis in die Nähe der Gehäusewand 24 und besitzt dort eine Nut 40 zur teilweisen Aufnahmen der Kerbe 32. Die Gebrauchslage des Spiegelgehäuses 4 ist demzufolge durch elastischen Eingriff der Kerbe 32 in die Nut 40 definiert.

An die Gehäuseplatte 14 ist eine auf den Arm 3 zuweisenden Nabe 26 angeformt, welche sich in die Einsenkung 6 erstreckt. Die das Rohrteil 10 außen umgebende Nabe 26 hat eine zylindrische Kulisse 34, welche mit einer sich axial erstreckenden, keilförmigen Ausnehmung 36 versehen ist. Die Ausnehmung 36 ist an demjenigen Umfangsabschnitt der Kulisse 34 ausgebildet, der der Nut 40 sowie in Gebrauchslage der Kerbe 32 gegenüberliegt. Der Boden der Ausnehmung 36 hat demzufolge einen kleineren Achsabstand als der zylindrische Teil der Kulisse 34.

In einer radialen Durchgangsbohrung durch die Rippe 25 ist ein Übertragungsstift 42 radial verschieblich aufgenommen, dessen klappachsennahes Ende 44 durch die gegen sein klappachsenfernes Ende 46 drückende Kerbe 32 gegen die Kulisse 34 gedrückt wird.

Bei der in Fig. 1 in ausgezogenen Linien und in Fig. 2 dargestellten Gebrauchslage des Gehäuses relativ zum Fußteil 2 sitzt das Ende 44 des Übertragungsstift 42 im Boden der Ausnehmung 36 und das Ende 46 kann gegen den Kamm der Kerbe 32 anliegen. Wie erwähnt sitzt die Kerbe 32 in der Nut 40, deren Außenkanten die Kerbe 32 an ihren dachartigen Flanken ergreift. Wird das Gehäuse 4 aus der Gebrauchslage in die in Fig. 1 strichpunktiert dargestellte Lage verschwenkt, treibt die in Fig. 1 dargestellte rechte Flanke der Ausnehmung 36 den Übertragungsstift 42 gegen die Blattfeder 30 und drückt diese in Richtung auf die Fußwand 22, wo sie hinreichend weit radial ausweichen kann. Da die Tiefe der Ausnehmung 36 größer ist als die Erhebung des Kamms der Kerbe 32 über den Hauptteil der Blattfeder 30, wird die Blattfeder 30 beim Ausschwenken des Gehäuses 4 aus der Gebrauchslage soweit gegen die Fußwand 22 durch den Übertragungsstift 42 gedrückt, daß der Kamm der Kerbe 32 von der Außenperipherie der Gehäuseplatte 14 beiderseits der Nut 40 abhebt. Bei weitergehender Verschwenkung des Gehäuses 4 aus der Nähe der Gebrauchslage reitet das ballige Ende 44 auf dem zylinderförmigen Teil der Kulisse 34 der Nabe 26, so daß die Blattfeder 30 außer Eingriff mit der Gehäuseplatte 14 bleibt. Während des Abklappens des Gehäuses 4 relativ zum Fußteil 2 ist mithin nur ein relativ kleines Drehmoment zu überwinden, welches durch die Reibungskraft zwischen dem Ende 44 und der Kulisse 34 und den relativ geringen Abstand des Angriffspunktes der Reibungskraft von der Achse 20 gegeben ist. Dieses Drehmoment kann noch dadurch verkleinert werden, daß das Ende 44 als in einem hülsenförmigen Übertragungsstift 42 drehbare Kugel ausgebildet ist. Wohl ist beim Verlassen der Gebrauchslage ein gewisses Anfangsdrehmoment zu überwinden, was jedoch durch eine geeignete Wahl des Keilwinkels der Ausnehmung 36 gemindert werden kann, wenn etwa der Steigungswinkel des Keiles geringer ist als der Steigungswinkel der Kerbe.

Wie üblich kann ein Stromversorgungskabel 48 durch den Arm 3 und den hohlen Schraubstopfen 9 sowie das hohle Rohrteil 10 in das Innere des Gehäuse 4 verlegt sein.

Das Ritzel 15 besitzt Außenverzahnung und ist um das Rohrteil 10 frei drehbar. Der Ring 13 umgreift formschlüssig einen radialen Ansatz 17 am Rohrteil 10 und ist auf diesem daher zwar axial jedoch nicht in Umfangsrichtung beweglich. Die Oberseite des Ringes 13 ist mit einem Kranz von gleichbeanstandeten Sacklöchern 19 versehen, und die Unterseite des Ritzels 15 ist mit einem Kranz von mit den Sacklöchern korrespondieren Warzen versehen. Daher bilden das Ritzel 15 sowie der Ring 13 unter Beteiligung der Druckfeder 12 eine Rutschkupplung, für ein motorisches Abschwenken des Gehäuses 4 relativ zum Fußteil 2, wenn beispielsweise das Abtriebsritzel eines nicht dargestellten, etwa in einem becherförmigen Aufsatz 21 auf der Gehäuseplatte 14 gehäusefest eingebaute Motors mit dem Ritzel 13 kämmt.

## Patentansprüche

1. Fahrzeug-Außenspiegel mit einem am Fahrzeug befestigbaren Fuß (2), auf welchem ein ein Spiegelglas tragendes Gehäuse (4) um die Achse eines Rohrstücks (10) schwenkbar befestigt ist, sowie mit einer Rastvorrichtung, welche an einem Fußteil ein erstes Rastelement (30) und an einem dem Fußteil unmittelbar benachbarten Gehäuseteil ein zweites Rastelement (34) aufweist, wobei der gegen Federkraft lösbare Eingriff der Rastelemente eine Gebrauchslage des Gehäuses relativ zum Fuß definiert, dadurch gekennzeichnet, daß eines der beiden Rastelemente (30) von einem radial verschiebbaren Übertragungselement (42) beaufschlagt ist, welches gegen eine rohrstücknahe Kulisse (34) an einen dem Rastelement (30) entsprechenden Umfangsabschnitt (36) einen anderen Abstand von der Achse (20) hat als an einem dem Umfangsabschnitt in Umfangsrichtung benachbarten Kulissenabschnitt.

2. Außenspiegel nach Anspruch 1, dadurch gekennzeichnet, daß das radial äußere Ende des Übertragungselementes als Rastelement ausgebildet ist.

3. Außenspiegel nach einem der vorstehenden Ansprüche, dadurch gekennzeichnet, daß die Kulisse am Fuß (2) und das Übertragungsorgan (42) in Gehäuse (4) gelagert ist.

4. Außenspiegel nach einem der vorstehenden Ansprüche, dadurch gekennzeichnet, daß das Übertragungselement ein in einem Fußteil (25) radial verschiebbar gelagerter Übertragungsstift (42) ist, welcher am achsfernen Ende (46) gegen den unteren Teil (38) eines fußseitigen radial elastischen Rastelementes (30) anliegt, wobei der Umfangsabschnitt (36) einen kleineren Achsabstand aufweist als die umfangmäßig benachbarten Kulisseabschnitte.

5. Außenspiegel nach Anspruch 4, dadurch gekennzeichnet, daß das fußseitige radial elastische Rastelement eine Blattfeder (30) mit auf das Gehäuseteil (14, 24) zuweisender Kerbe (32) ist.

6. Außenspiegel nach Anspruch 5, dadurch gekennzeichnet,daß das andere Rastelement eine in dem Gehäuseteil (14) ausgebildete Nut (40) ist.

7. Außenspiegel nach Anspruch 5 oder 6, dadurch gekennzeichnet, daß die Kerbe (32) dachförmig und der Umfangsabschnitt (36) keilförmig gestaltet sind.

8. Außenspiegel nach Anspruch 7, dadurch gekennzeichnet, daß der Steigungswinkel des Keiles geringer ist als der Steigungswinkel der Kerbe.

9. Außenspiegel nach einem der vorstehenden Ansprüche, dadurch gekennzeichnet, daß die Kulisse als eine das Rohrstück (9, 10) umgebender Nabe einer Gehäuseplatte (14) ausgebildet ist, die sich axial in eine Einsenkung (6) erstreckt, welche in eine Lagerplatte (5) eines vom Fuß (2) seitlich abstehenden Armes (3) ausgebildet ist.

10. Außenspiegel nach einem der vorstehenden Ansprüche, dadurch gekennzeichnet, daß zwischen die Gehäuseplatte (14) und eine Lagerplatte (5) am Arm (3) eine die Nabe und das Rohrstück (9, 10) umgebende Lagerscheibe (18) aus Kunststoff zwischengelegt ist.

11. Außenspiegel nach einem der vorstehenden Ansprüche, dadurch gekennzeichnet, daß ein Wandabschnitt, an welchem eines der beiden Rastelemente ausgebildet ist, relativ zu einer Gegenfläche (22), an welcher das andere Rastelement (30) ausgebildet ist, beiderseits des Rastelementes (40) zurückversetzt ist.

12. Außenspiegel nach Anspruch 11, dadurch gekennzeichnet, daß das eine Rastelement eine in dem Gehäuseteil (14) ausgebildete Nut (40) ist, in welche das federbelastete andere Rastelement (30) bei Gebrauchslage eingreift, und daß das Gehäuseteil (14) beiderseits der Nut gegen die Gegenfläche (22) zurückversetzt ist.

## Claims

1. An exterior mirror for a vehicle, with a foot (2) securable on the vehicle, a casing (4) supporting a mirror glass being secured on the said foot so as to be pivotable about the axis of a pipe portion (10), and also with a catch device having a first catch member (30) on a foot part and a second catch member (34) on a casing part immediately adjacent to the foot part, wherein the engagement of the catch members, releasable against the force of a spring, defines an operational position of the casing relative to the foot, **characterised in that** one (30) of the two catch members is impinged on by a radially displaceable transmission member (42), which, against a link (34) near the pipe portion, at a peripheral portion (36) corresponding to the catch member (30), is at a different distance from the axis (20) than a portion of the link adjacent to the said peripheral portion in the peripheral direction.

2. An exterior mirror in accordance with claim 1, **characterised in that** the radial outer end of the transmission member is formed as a catch member.

3. An exterior mirror in accordance with one of the preceding claims, **characterised in that** the link is mounted on the foot (2) and the transmission body (42) is mounted in the casing (4).

4. An exterior mirror in accordance with one of the preceding claims, **characterised in that** the transmission member is a transmission pin (42) radially displaceably mounted in a foot part (25), and at the end (46) remote from the axis the said member rests against the lower part (38) of a resilient catch member (30) radially positioned at the foot, the peripheral portion (36) being at a shorter distance from the axis than the peripherally adjacent portion of the link.

5. An exterior mirror in accordance with claim 4, **characterised in that** the resilient catch member, radially positioned at the foot, is a leaf spring (30) with an indentation (32) towards the casing part (14, 24).

6. An exterior mirror in accordance with claim 5, **characterised in that** the other catch member is a groove (40) formed in the casing part (14).

7. An exterior mirror in accordance with claim 5 or 6, **characterised in that** the indentation (32) is formed to be roof-shaped and the peripheral portion (36) is wedge-shaped.

8. An exterior mirror in accordance with claim 7, **characterised in that** the angle of slope of the wedge is less than the angle of slope of the indentation.

9. An exterior mirror in accordance with one of the preceding claims, **characterised in that** the link is formed as a hub, surrounding the pipe portion (9, 10), of a casing plate (14), extending axially into a recess (6) formed in a bearing plate (5) of an arm (3) projecting laterally from the foot (2).

10. An exterior mirror in accordance with one of the preceding claims, **characterized in that** a plastic bearing disc (18), surrounding the hub and the pipe portion (9, 10), is interposed between the casing plate (14) and a bearing plate (5) on the arm (3).

11. An exterior mirror in accordance with one of the preceding claims, **characterised in that** a wall portion, on which one of the two catch members is formed, is set back on both sides of the catch member (40) relative to an opposite surface (22) on which the other catch member (30) is formed.

12. An exterior mirror in accordance with claim 11, **characterised in that** one catch member is a groove (40) formed in the casing part (14), in which groove the other spring-loaded catch member (30) engages when in an operational position, and the casing part (14) is set back on both sides of the groove towards the opposite surface (22).

## Revendications

1. Rétroviseur extérieur de véhicule avec un support (2) pouvant être fixé sur le véhicule, sur lequel un corps (4) portant un miroir est fixé pivotant autour de l'axe d'une portion de tube (10) et avec un dispositif de crantage qui présente sur une partie de support un premier élément de crantage (30) et sur une partie de corps placée à proximité immédiate de la partie de support un second élément de crantage (34), l'engagement amovible contre la force de ressort des éléments de crantage définissant une position d'utilisation du corps par rapport au support, caractérisé en ce que l'un des deux éléments de crantage (30) est sollicité par un élément de transmission (42) coulissant radialement, lequel a contre une coulisse (34) proche de la portion de tube sur une section de circonférence (36) correspondant à l'élément de crantage (30) une autre distance de l'axe (20) que sur une section de coulisse proche de la section de circonférence dans la direction de la circonférence.

2. Rétroviseur extérieur selon la revendication 1, caractérisé en ce que l'extrémité extérieure radiale de l'élément de transmission est formée comme élément de crantage.

3. Rétroviseur extérieur selon l'une des revendications précédentes, caractérisé en ce que la coulisse est montée sur le support (2) et l'organe de transmission (42) est monté dans le corps (4).

4. Rétroviseur extérieur selon l'une des revendications précédentes, caractérisé en ce que l'élément de transmission est une tige de transmission (42) montée coulissante radialement dans une partie de support (25), laquelle repose contre l'extrémité (46) éloignée de l'axe contre la partie inférieure (38) d'un élément de crantage (30) élastique radiale sur le côté du support, la section de circonférence (36) présentant un entraxe plus faible que les sections de coulisse proches selon la circonférence.

5. Rétroviseur extérieur selon la revendication 4, caractérisé en ce que l'élément de crantage élastique radiale sur le côté du support est un ressort à lames (30) avec encoche (32) tournée vers la partie de corps (14, 24).

6. Rétroviseur extérieur selon la revendication 5, caractérisé en ce que l'autre élément de crantage est une rainure (40) formée dans la partie de corps (14).

7. Rétroviseur extérieur selon la revendication 5 ou 6, caractérisé en ce que l'encoche (32) est en forme de toit et la section de circonférence (36) en forme de coin.

8. Rétroviseur extérieur selon la revendication 7, caractérisé en ce que l'angle d'inclinaison du coin est plus faible que l'angle d'inclinaison de l'encoche.

9. Rétroviseur extérieur selon l'une des revendications précédentes, caractérisé en ce que la coulisse est formée comme un moyeu d'une plaque de corps (14) entourant la portion de tube (9, 10), qui s'étend axialement dans un creux (6), lequel est formé dans une plaque d'appui (5) d'un bras (3) écarté latéralement du support (2).

10. Rétroviseur extérieur selon l'une des revendications précédentes, caractérisé en ce qu'une rondelle d'appui (18) en matière plastique entourant le moyeu et la portion de tube (9, 10) est intercalée entre la plaque de corps (14) et une plaque d'appui (5) sur le bras (3).

11. Rétroviseur extérieur selon l'une des revendications précédentes, caractérisé en ce qu'une section de paroi, sur laquelle est formé un des deux éléments de crantage, est décalée en arrière des deux côtés de l'élément de crantage (40) par rapport à une contre-surface (22) sur laquelle est formé l'autre élément de crantage (30).

12. Rétroviseur extérieur selon la revendication 11, caractérisé en ce que l'un des éléments de crantage est une rainure (40) formée dans la partie de corps (14), dans laquelle l'autre élément de crantage (30) sollicité élastiquement s'engage en position d'utilisation et en ce que la partie de corps (14) est décalée en arrière des deux côtés de la rainure contre la contre-surface (22).
